Europäisches Patentamt

European Patent Office

Office européen des brevets

(19)

(11) Veröffentlichungsnummer: **0 059 776**

**A1**

(12) **EUROPÄISCHE PATENTANMELDUNG**

(21) Anmeldenummer: 81105101.0

(22) Anmeldetag: 01.07.81

(51) Int. Cl.³: **E 04 F 13/08**

(30) Priorität: 05.03.81 DE 3108274

(43) Veröffentlichungstag der Anmeldung:
15.09.82 Patentblatt 82/37

(84) Benannte Vertragsstaaten:
AT BE CH DE FR GB IT LI LU NL SE

(71) Anmelder: Bausch, Fritz
Waldstrasse 5-10
D-6103 Griesheim(DE)

(72) Erfinder: Ries, Werner
Liebersbacher Strasse 70
D-6943 Birkenau(DE)

(72) Erfinder: Bausch, Fritz
Waldstrasse 5-10
D-6103 Griesheim(DE)

(74) Vertreter: Kempe, Wolfgang, Dr.
Postfach 1273
D-6800 Mannheim 1(DE)

(54) Wandschirm aus Platten.

(57) Ein derartiger Wandschirm dient zur Verkleidung von Wänden und als Schutz gegen Feuchtigkeit und Kälte bzw. Wärme. Um eine einfache Errichtung des Wandschirmes zu ermöglichen ist die dem ästhetischen Zweck dienende Platte (1) auf ihrer Rückseite mit einer Isolierstoffplatte (2) verbunden, so daß sich ein einheitliches Bauteil ergibt. Die Kanten dieses Bauteiles sind falzartig ausgebildet, so daß die Bauteile zur Errichtung eines Wandschirmes zusammengesteckt werden können. Der Falz dichtet zugleich die Stoßfugen zwischen den Bauteilen und fördert die ebene und im Fugenverlauf gleichmäßige Ausrichtung des Wandschirmes. Die Bauteile können unmittelbar auf die zu verkleidende Wand (9) aufgeklebt werden oder sie weisen Steckverbindungselemente (11) auf, die in eine an der Wand angeschraubte Winkelprofilschiene (10) einsteckbar sind.

Fig. 14

EP 0 059 776 A1

Croydon Printing Company Ltd.

**0059776**

Fritz Bausch, D-6103 Griesheim          22. Juni 1981

Bs 2

−1−

## Wandschirm aus Platten

Die Erfindung betrifft einen Wandschirm aus stumpf aufeinanderstoßenden Platten.

Es ist bekannt, Wände, insbesondere Außenwände von Gebäuden, durch Wandbeschläge oder einen Wandschirm gegen Feuchtigkeit oder Kälte zu schützen. Besonders verbreitet sind Wandschirme aus Schieferplatten oder Holzschindeln, für neuzeitliche Bauten auch aus Asbestzement. Hochhäuser oder repräsentative Bauten werden mit Kupfer- oder Aluminiumblechplatten oder mit Marmorplatten bekleidet.

Diese bekannten Wandbekleidungen haben jedoch allesamt den Nachteil, daß sie einen relativ niedrigen Wärmedämmwert besitzen. Wird aber auf eine gute Wärmedämmung Wert gelegt, so müssen zwischen Wand und Wandschirm Isolierstoffplatten vorgesehen werden. Dies bedingt einen zusätzlichen Arbeitsgang an der Baustelle und erschwert häufig die akkurate, d.h. ebene und ausgerichtete Anbringung der relativ dünnen Platten, die den Wandschirm bilden sollen.

Der vorliegenden Erfindung liegt die Aufgabe zugrunde, den Wandschirm der eingangs beschriebenen Art so zu verbessern, daß er nicht nur als Wetter-, sondern auch als Wärme- und Kälteschutz ausgebildet in einfacher und ästhetisch befriedigender Weise vorort errichtet werden kann.

Diese Aufgabe wird durch die kennzeichnenden Merkmale des Anspruches 1 gelöst. Die erfindungsgemäß aus Platte und Isolierstoffplatte gebildeten einteiligen Bauteile können in einfacher Weise durch Zusammenstecken der aneinandergrenzenden Bauteile zu einem Wandschirm verbunden werden, dessen Sichtfläche durch die durch die falzartige Ausbildung gegebene Führung eben und im Fugenverlauf gleichmäßig ausgerichtet ausgebildet ist.

Zweckmäßige Ausgestaltungen der Bauteile, die die falzartige Ausbildung, eine Befestigung des Wandschirmes an der Wand und zweckmäßige Baustoffe für die Bauteile betreffen, sind in den Unteransprüchen angegeben. Die Erfindung wird nachfolgend anhand von in der Zeichnung dargestellten Ausführungsbeispielen näher beschrieben und erläutert. Es zeigen:

Fig. 1 bis 3 ein Bauteil zum Aufbau eines Wandschirmes in der Frontansicht, der Seitenansicht und der Ansicht von unten;

Fig. 4 und 5 zwei eine Eckverkleidung bildende Bauteile in der Ansicht von unten;

Fig. 6 bis 11 unterschiedliche Formen der falzartigen Ausgestaltungen der Kanten verschiedener Bauteile in der Seitenansicht und

Fig. 12 bis 14 je eine Besfestigungsvorrichtung für einen vor einer Wand angeordneten Wandschirm im Schnitt.

...

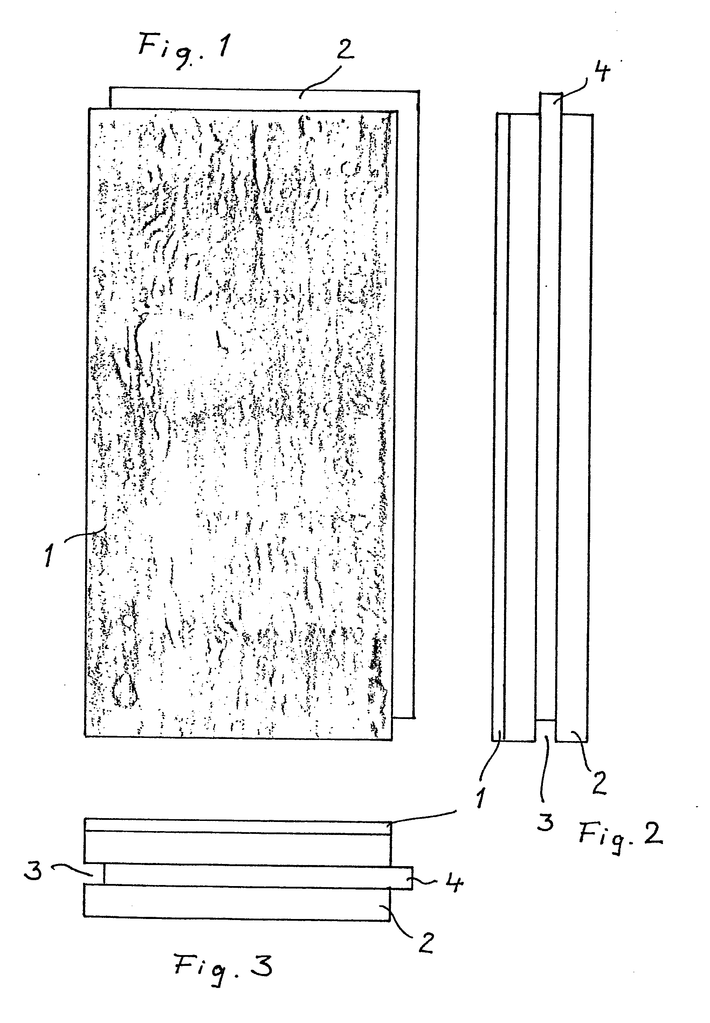

Das Bauteil gem. Fig. 1 bis 3 besteht aus einer rechteckigen dünnen Marmorplatte, auf deren Rückseite eine Isolierstoffplatte 2 aus einem Hartschaumstoff aufgeklebt ist, deren Breite und Höhe mit derjenigen der Platte 1 übereinstimmt. Die Isolierstoffplatte 2 weist an einer ihrer Längsseiten und einer ihrer Breitseiten je eine Nut 3 und an der anderen Längs- und Breitseite je eine entsprechende Feder 4 auf, die ein Zusammenstecken benachbarter Bauteile ermöglichen. Die Bauteile können mit der Rückseite der Isolierstoffplatte 2 unmittelbar auf die zu verkleidende Gebäudewand aufgeklebt werden.

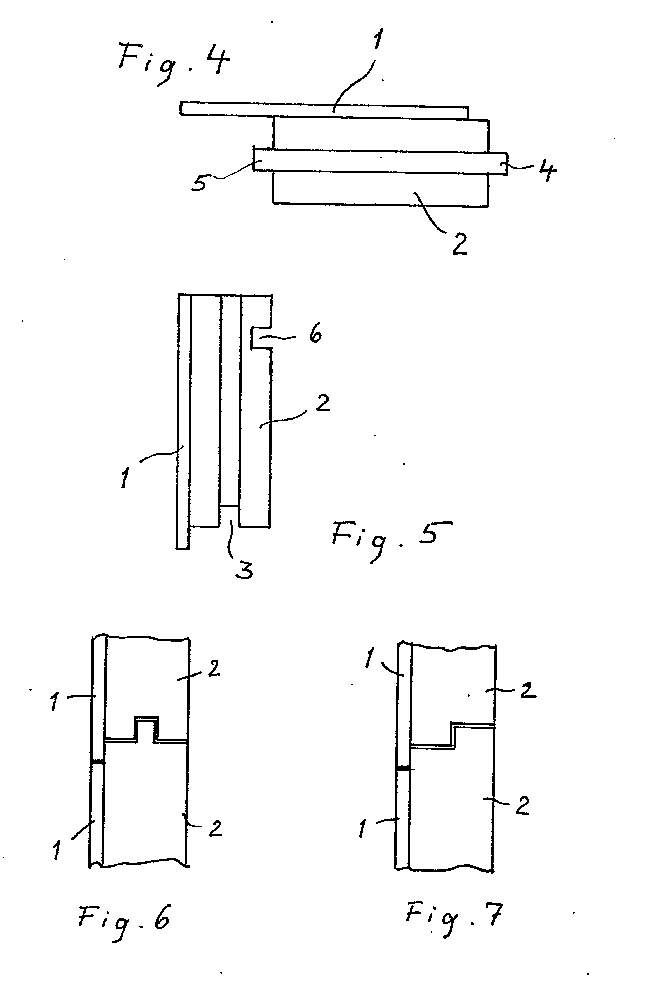

Fig. 4 zeigt ein Bauteil für eine Eckbekleidung. Die Isolierstoffplatte 2 ist gegen die Marmorplatte versetzt angeordnet und weist außer der Feder 4 auf der gegenüber liegenden Seitenfläche eine weitere Feder 5 auf. Das an dieses Eckbauteil angepaßte und einen Winkel von 90° mit diesem bildende Bauteil ist in Fig. 5 dargestellt. Es wird in der geforderten Breite von einem normalen Bauteil glatt abgeschnitten. Auf der Rückseite seiner Isolierstoffplatte 2 wird eine zur Feder 5 passende Nut 6 gefräst, so daß die beiden Bauteile gem. Fig. 4 und 5 ebenfalls zusammengesteckt werden können. Die Marmorplatte 1 des Bauteiles gem. Fig. 4 überdeckt dabei die glatt abgeschnittene Seitenfläche des Bauteiles gem. Fig. 5. Marmorplatte 1 und Isolierplatte 2 sind beim Ausführungsbeispiel gemäß Fig. 4 und 5 versetzt verklebt, so daß sich eine falzartige Ausbildung zwischen den einzelnen Bauteilen ergibt, durch die die Dichtung der Stoßfugen zwischen zwei zusammengesteckten Bauteilen in noch stärkerem Maße gewährleistet ist als bei den Bauteilen gemäß Fig. 1 bis 3.

Weitere falzartige Ausbildungen der Kanten der Bauteile sind in Fig. 6 bis 11 dargestellt, die Anfang- und Endstück

...

zweier zusammengesteckter Bauteile in der Teilansicht zeigen. Auch bei diesen Ausführungsbeispielen sind die Marmorplatten mit 1 und die Isolierstoffplatten mit 2 bezeichnet. Weitere Falzausbildungen sind selbstverständlich möglich.

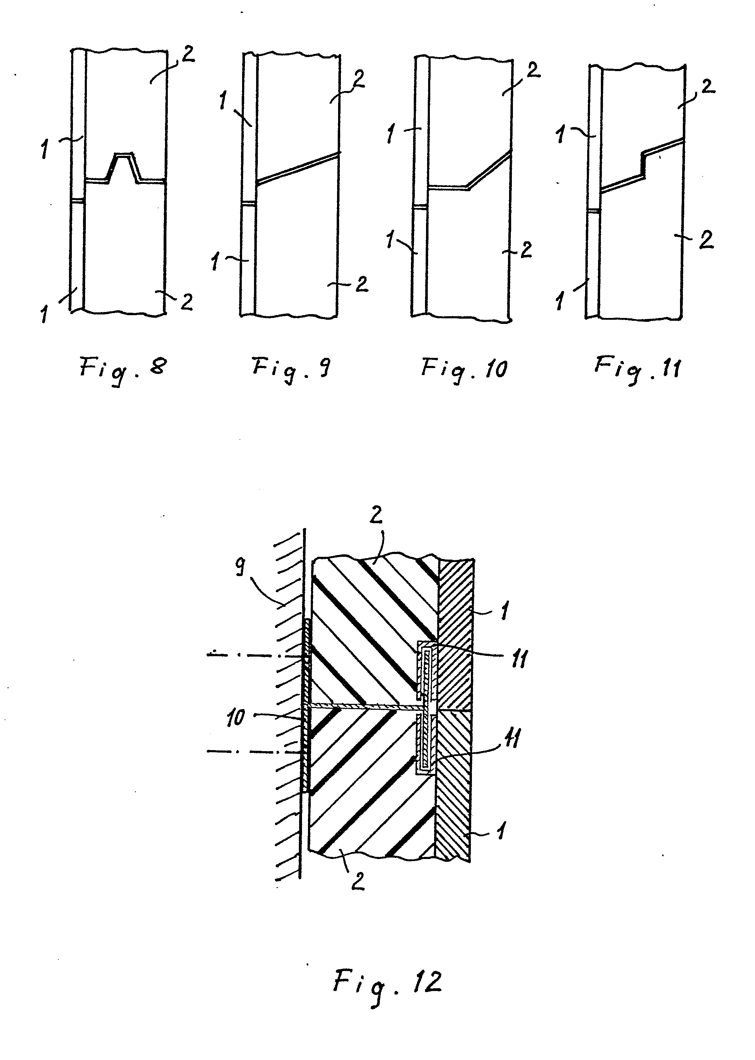

Fig. 12 bis 14 zeigen Befestigungsvorrichtungen des erfindungsgemäßen Wandschirmes.

Beim Ausführungsbeispiel gemäß Fig. 12 ist im unteren und oberen Endstück eines jeden Bauteiles auf der Rückseite der Marmorplatte 1 je ein Steckverbindungselement 11 befestigt. Zwei benachbarte Steckverbindungselemente 11 zweier in vertikaler Richtung aneinanderstoßender Bauteile können auf eine gemeinsame, an der Gebäude-Außenwand 9 befestigte Winkelschiene 10          aufgeschoben werden, so daß jedes Bauteil oben und unten gehalten wird.

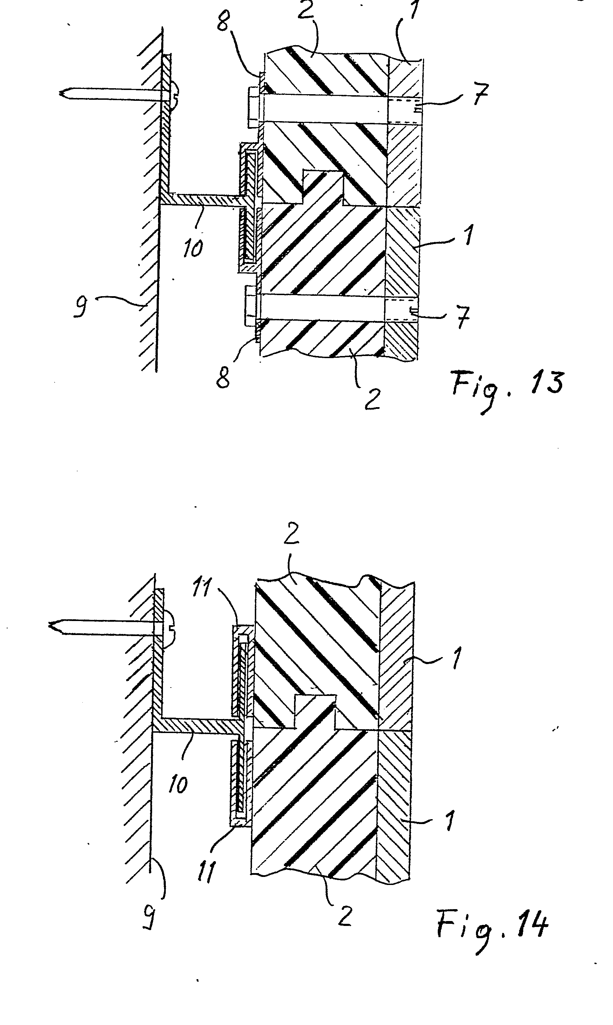

Fig. 13 zeigt einen mit Abstand vor einer Wand befestigten Wandschirm. Im unteren und oberen Endstück jedes Bauteiles ist jede Platte 1 mit einem Schraubbolzen 7 verbunden, der die Isolierstoffplatte 2 durchdringt und mit einem Spannplättchen 8 auf der Rückseite der Isolierstoffplatte verbunden ist.

Das Spannplättchen 8 ist gleichzeitig als Steckverbindungselement ausgebildet, das in die an der Wand 9 eines Gebäudes befestigte Winkelschiene 10 einsteckbar ist.

Bei dem Wandschirm gemäß Fig. 14 fehlt der Schraubbolzen 7. Hier ist das Steckverbindungselement 11 unmittelbar auf die Rückseite der Isolierstoffplatte 2 aufgeklebt. Das Steckverbindungselement 11 ist in gleicher Weise, wie bei den Ausführungsbeispielen gemäß Fig. 12 und 13, in die an der Wand 9 befestigte Winkelprofilschiene 10 einsteckbar.

.  .  .

0059776

- 5 -

Die Befestigungsart gem. Fig. 13 wird vorzugsweise für Wandschirme in höher gelegenen Stockwerksbereichen verwendet, da die Schraubbolzen 7 den Platten 1 einen zusätzlichen Halt an den Isolierstoffplatten 2 verleihen, was im Brandfall ein Herunterfallen der Platten verhindert. In unteren Stockwerksbereichen, in denen ein derartiges Herunterfallen der Platten 1 keine Gefahr darstellt, kann die billigere Befestigungsart gem. Fig. 14 verwendet werden.

Als Werkstoff für die Platten 1 kommt neben Marmor jeder andere Naturstein, aber auch Kunststein, Asbestzement, gebrannte Tonplatten, Betonplatten, Keramikfliesen, Holz, Kunststoff, Glas, Blech oder dekorative Schichtstoffplatten in Frage.

-1-

Patentansprüche

1. Wandschirm aus stumpf aufeinanderstoßenden Platten, dadurch gekennzeichnet, daß jede Platte (1) rückseitig mit einer Isolierstoffplatte (2) zu einem Bauteil verbunden ist, das an mindestens zwei sich gegenüberliegenden Kanten zur steckbaren Verbindung mit den benachbarten Bauteilen und zur Dichtung der Stoßfugen falzartig ausgebildet ist.

2. Wandschirm nach Anspruch 1, dadurch gekennzeichnet, daß die falzartige Ausbildung ausschließlich die Kanten der Isolierstoffplatte (2) betrifft.

3. Wandschirm nach Anspruch 1 oder 2, dadurch gekennzeichnet, daß die Isolierstoffplatte (2) die gleichen Flächenmaße wie die Platte (1) aufweist und mit dieser versetzt verbunden ist, so daß sich an den Kanten Überlappungen zwischen den Platten (1) eines Bauteiles und den Isolierstoffplatten (2) seiner benachbarten Bauteile ergeben.

4. Wandschirm nach einem der Ansprüche 1 bis 3, dadurch gekennzeichnet, daß die Kanten aneinanderstoßender Isolierstoffplatten (2) als Nut (3, 6) und Feder (4, 5) ausgebildet sind.

...

5. Wandschirm nach einem der Ansprüche 1 bis 3, dadurch gekennzeichnet, daß die Kanten der Isolierstoffplatten (2) stufenförmig ausgebildet sind, wobei die Stufen aneinanderstoßender Isolierstoffplatten fugenlos ineinander passen.

6. Wandschirm nach einem der Ansprüche 1 bis 3, dadurch gekennzeichnet, daß die Kanten der Isolierstoffplatten (2) abgeschrägt ausgebildet sind, wobei die Abschrägungen aneinanderstoßender Isolierstoffplatten fugenlos aneinander liegen.

7. Wandschirm nach einem der vorhergehenden Ansprüche, dadurch gekennzeichnet, daß die Platte (1) mit der Isolierstoffplatte (2) verklebt ist.

8. Wandschirm nach einem der vorhergehenden Ansprüche, dadurch gekennzeichnet, daß jede Platte (1) mindestens einen mit ihr kraftschlüssig verbundenen Bolzen (7) aufweist, der die Isolierstoffplatte (2) durchdringt und mit einem Spannplättchen (8) auf der Rückseite der Isolierstoffplatte verbunden ist.

9. Wandschirm nach Anspruch 8, dadurch gekennzeichnet, daß das Spannplättchen (8) als Steckverbindungselement ausgebildet ist, das in eine an der Gebäudeaußenwand (9) befestigte Winkelprofilschiene (10) einsteckbar ist.

10. Wandschirm nach einem der Ansprüche 1 bis 7, dadurch gekennzeichnet, daß jede Isolierstoffplatte (2) auf ihrer Rückseite mindestens ein Steckverbindungselement (11) aufweist, das in eine an der Gebäudeaußenwand (9) befestigte Winkelprofilschiene (10) einsteckbar ist.

11. Wandschirm nach einem der Ansprüche 1 bis 7, dadurch gekennzeichnet, daß jede Platte (1) auf ihrer Rückseite mindestens ein Steckverbindungselement (11) aufweist, das in eine an der Gebäudeaußenwand (9) befestigte, die Isolierstoffplatte (2) überbrückende Winkelprofilschiene (10) einsteckbar ist.

12. Wandschirm nach einem der Ansprüche 9 bis 11, dadurch gekennzeichnet, daß am oberen und unteren Endstück jedes Bauteiles je ein Einsteckverbindungselement (11) vorgesehen ist.

...

13. Wandschirm nach Anspruch 12, dadurch gekennzeichnet, daß jeweils zwei aneinandergrenzende und unterschiedlichen Bauteilen zugeordnete Steckverbindungselemente (11) in eine gemeinsame Winkelprofilschiene (10) eingesteckt sind.

14. Wandschirm nach einem der vorhergehenden Ansprüche, dadurch gekennzeichnet, daß die Isolierstoffplatten (2) aus einem formbeständigen Kunstschaum bestehen.

15. Wandschirm nach einem der vorhergehenden Ansprüche, dadurch gekennzeichnet, daß die Platten (1) aus Naturstein, Kunststein, Asbestzement, gebranntem Ton, Beton, Keramikfliesen, Holz, Kunststoff, Glas, Blech oder dekorativen Schichtstoffplatten bestehen.

Fig. 1

Fig. 2

Fig. 3

Fig.4

_1_

_5_

_4_

_2_

_6_

_2_

_1_

_3_

Fig.5

_2_

_1_

_2_

_1_

Fig.6

_2_

_1_

_2_

_2_

_1_

Fig.7

Fig. 8    Fig. 9    Fig. 10    Fig. 11

Fig. 12

*Fig. 13*

*Fig. 14*

**0059776**
Nummer der Anmeldung

Europäisches Patentamt

**EUROPÄISCHER RECHERCHENBERICHT**

EP 81 10 5101.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - U - 7 314 250 (J. HARREIS) <br> * Ansprüche 1, 2; Fig. 1, 2 * | 1,14,15 |
| A | DE - U - 1 803 316 (G. SCHNEIDER) <br> * Fig. 2 bis 4 * | 5 |
| A | DE - U - 7 038 816 (G. SCHMID) <br> * Anspruch 1; Fig. 1 bis 3 * | 3 |
| A | DE - U - 7 327 949 (J. ERTL KG) <br> * Fig. 2, 6 * | 9,12 |
| A | DE - U - 7 011 674 (J. NIEDERGÜNZL) <br> * Fig. 6, 9, 10 * | 1 |

**KLASSIFIKATION DER ANMELDUNG (Int. Cl.³)**

E 04 F 13/08

**RECHERCHIERTE SACHGEBIETE (Int. Cl.³)**

E 04 B 1/00
E 04 B 2/00
E 04 F 13/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 04-05-1982 | v. WITTKEN |

EPA form 1503.1 06.78